# EUROPEAN PATENT SPECIFICATION

(11) **EP 3 683 406 B1**
(45) Date of publication and mention of the grant of the patent: **29.11.2023**
(21) Application number: 19152665.6
(22) Date of filing: 18.01.2019
(51) Int. Cl.: B32B 18/00, C04B 41/45

(54) **ABRADABLE HYBRID MATERIAL, PARTICULARLY FOR SEAL ELEMENTS IN GAS TURBINES, AND MANUFACTURING METHOD THEREOF**
ABREIBBARES HYBRIDES MATERIAL, INSBESONDERE FÜR DICHTUNGSELEMENTE IN GASTURBINEN, UND HERSTELLUNGSVERFAHREN DAFÜR
MATÉRIAU ABRADABLE HYBRIDE, EN PARTICULIER POUR DES ÉLÉMENTS D'ÉTANCHÉITÉ DANS DES TURBINES À GAZ ET SON PROCÉDÉ DE FABRICATION

(43) Date of publication of application: 22.07.2020
(73) Proprietor: Ansaldo Energia Switzerland AG, 5401 Baden (CH)
(72) Inventor: PAUL, Anish, 5200 BRUGG (CH); RENUSCH, Daniel, 5400 BADEN (CH); BRICAUD, Cyrille Jerome, 79618 RHEINFELDEN (DE); RUEDEL, Uwe Wolfgang, 5406 BADEN (CH); FONT CALAFELL, Edgard, 8052 ZÜRICH (CH)
(74) Representative: Studio Torta S.p.A.

(56) References cited:
- EP-A1- 3 085 900
- EP-A2- 0 751 104
- US-A- 4 198 454
- US-A- 5 310 592
- US-A- 5 388 959
- US-A1- 2016 356 497
- US-B1- 6 544 003

## Description

### TECHNICAL FIELD OF THE INVENTION

The present invention generally relates to materials for making seal elements in gas turbines.

In particular, the invention relates to a hybrid CMC - ceramic foam abradable material, to the manufacturing method thereof, and to the use of such materials in abradable seal elements for gas turbines.

### DESCRIPTION OF PRIOR ART

A gas turbine basically comprises a casing that houses a compressor section, a combustor section and a turbine section.

A supply of air flows through the compressor section where it is compressed and then directed into the combustor section. In the combustor section, the compressed air is mixed with a fuel and the resulting air/fuel mixture is combusted to produce high temperature and high pressure gas, which is then injected into the turbine section where it expands down to the exhaust pressure, producing a shaft work output in the process.

The turbine section comprises a stator (stationary part) and a rotor (rotating part) provided with rows of vanes and blades respectively; the static vanes direct the working gas onto the blades causing the blades to rotate, thereby turning the rotor, which is connected to a generator for producing electricity.

It is known that some components of a gas turbines, in particular of the turbine section, are subject, in use, to high temperature variations, which may result in axial and/or radial movements between the components.

For example, such kind of movements due to temperature variations are typically experienced between a vane leading edge platform and a blade trailing edge shank directly facing each other, between a blade tip and the stator portion directly facing such a blade tip, between a vane hub and the rotor portion facing such vane hub.

In particular, a significant displacement has been reported, for example, in the space between a vane leading edge platform and the associated blade trailing edge shank.

It has in fact been observed that in a typical gas turbine, during steady state operation, the clearance between a vane leading edge platform and the associated blade trailing edge shank can significantly increase, due to thermal variations. As a consequence, hot gas ingestion can occur through such a gap, which requires the use of purge air to keep the temperature below allowable limits to protect other components, in particular the rotor and associated seals.

However, use of purge air contributes to increase the so-called TCLA (Turbine Cooling and Leakage Air) and reduces the overall efficiency of the turbine.

In order to eliminate, or at least reduce the use of purge air, it would be desirable to minimize the gap available for hot gas ingestion.

However, a certain amount of clearance is required between the vane leading edge platform and the blade trailing edge shank, for assembly requirements and to avoid rubbing between the vane and the blade because of the relative movements under different engine operating conditions.

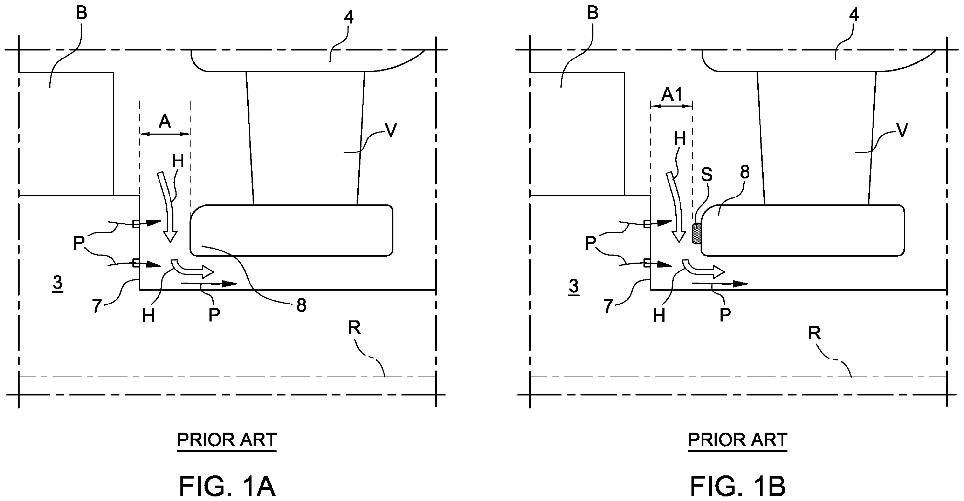

The above mentioned situation is schematically depicted in Figure 1A, where a blade B of a rotor 3, having an axis of rotation R (shown out of scale), and a vane V of a stator 4 of the turbine section of a gas turbine face each other and are axially spaced apart from each other.

Because of axial movements due to thermal variations, manufacturing tolerances and safety margins, an axial gap A has to be maintained between the blade B and the vane V, in particular between the trailing edge shank 7 of the blade B and the leading edge platform 8 of the vane V.

The gap A allows the passage of a significant amount of hot gas H below the vane V and purge air P is accordingly injected from the blade B and/or the vane V.

One known measure to reduce the gap A at this position is to use a seal element, as schematically shown in Figure 1B.

An annular seal element S is accordingly positioned, for example, on a front annular face of the leading edge platform 8 of the vane V.

Since the gas temperature in the gap can rise over 900°C, it is not possible to use a metallic seal element.

It is also not possible to use an abradable coating because: (a) the sintering process that can happen at the operating temperature can modify the properties of the coating material; and (b) the processing limitations restrict the application of relatively thick coatings which would be needed (with a thickness of at least 5-7 mm).

Therefore, only very thin seal elements are known to be used, for example 1 mm thick. Such seal elements have therefore a very low effect on the reduction of hot gas ingestion and on the amount of purge air required to keep the temperature below allowable limits.

From the other hand, it is known that ceramic matrix composites (CMC, consisting of ceramic fibers embedded in a ceramic matrix) are suitable materials for use in gas turbines.

For example, US6197424 discloses a ceramic composition for insulating components, made of ceramic matrix composites, of gas turbines. The composition comprises a plurality of hollow oxide-based spheres of various dimensions, a phosphate binder, and at least one oxide filler powder, whereby the phosphate binder partially fills gaps between the spheres and the filler powders. The spheres are situated in the phosphate binder and the filler powders such that each sphere is in contact with at least one other sphere and the arrangement of spheres is such that the composition is dimensionally stable and chemically stable at a temperature of approximately 1600°C.

US5962076 discloses an abradable seal comprising a plurality of hollow aluminosilicate spheres in a matrix of aluminium phosphate. The matrix of aluminium phosphate also has an aluminosilicate filler. The hollow aluminosilicate spheres in the aluminium phosphate matrix have a relatively high temperature capability of approximately 1300°C maximum.

US6984277 discloses a composite structure having a bond enhancement member extending across a bond joint between a ceramic matrix composite material and a ceramic insulation material, and a method of fabricating such a structure. The bond enhancement member may extend completely through the CMC material to be partially embedded in a core material bonded to the CMC material on an opposed side from the insulation material.

US2016356497A1 discloses a component for use in a gas turbine engine, the component comprising a structural component comprising silicon carbide fibers within a silicon carbide matrix, and a sacrificial layer joined to the structural component comprising unarranged ceramic fibers; in some embodiments, the sacrificial layer, which may be joined to the structural component and may comprising unarranged ceramic fibers, is a ceramic foam having a porosity such that it may be infiltrated in subsequent densification steps to bond to the structural component.

However, the performance of the known materials, and more in general of insulated ceramic matrix composite (CMC) materials, may be limited by the performance of the bond between the insulation and the structural CMC material.

Generally speaking, the bond strength at the surface layer of an insulated CMC material can be not fully satisfactory.

Therefore, there is still the need for suitable materials for use in a gas turbine, in particular for making seal structures positioned between a vane leading edge platform and a blade trailing edge shank.

Similar problem may occur in other regions of the gas turbine such as the clearance between each blade tip and the stator, and/or the clearance between a vane hub and the rotor.

### DISCLOSURE OF THE INVENTION

Accordingly, it is an object of the present invention to provide a material, and the manufacturing method thereof, suitable for overcoming the problem foregoing described of the prior art.

In particular, it is an object of the present invention to provide materials for making abradable seal elements in gas turbines.

The present invention accordingly relates to a hybrid CMC - ceramic foam abradable material as defined in Claim 1, and to a method of manufacturing such a material as defined in Claim 6.

The invention also relates to the use of such a material for making abradable seal elements for gas turbines, as defined in claim 10.

Advantageous preferred features of the invention are the subject matter of the dependent claims.

According to the invention, it is provided a hybrid CMC - ceramic foam material, comprising a ceramic matrix composite (CMC, consisting of ceramic fibers embedded in a ceramic matrix) and a ceramic foam.

The CMC can withstand temperatures of 1200°C or higher, whilst the ceramic foam can survive up to 1700°C.

Unlike known materials, generally having a ceramic foam layer bonded on a CMC structure, the present invention provides a hybrid material wherein the CMC and the ceramic foam are interpenetrated with each other.

In this way, the material of the invention is characterized by a high resistance to shear failure at the joint which can happen if there is any rubbing.

Moreover, according to the invention the CMC and the ceramic foam are advantageously sintered in a single step, resulting in a further improvement in the structural integrity of the material and also in a significant reduction of manufacturing costs.

It is also possible to vary abradability and erosion resistance of the material, by adjusting the porosity of the ceramic foam.

### BRIEF DESCRIPTION OF DRAWINGS

The invention is further described by way of example in the following non-limiting embodiments, with reference to the accompanying drawings in which:
- Figures 1A and 1B are schematic sectional views of a part of a gas turbine according to the prior art;
- Figure 2 is a schematic sectional view of a hybrid CMC - ceramic foam material according to the invention;
- Figure 3 is a schematic sectional view of a part of a gas turbine provided with a seal element made of the material according to the invention;
- Figure 4 is a schematic sectional view of another part of a gas turbine provided with a seal element made of the material according to the invention;
- Figure 5 is a schematic sectional view of yet another part of a gas turbine provided with a seal element made of the material according to the invention.

### DETAILED DESCRIPTION OF PREFERRED EMBODIMENTS OF THE INVENTION

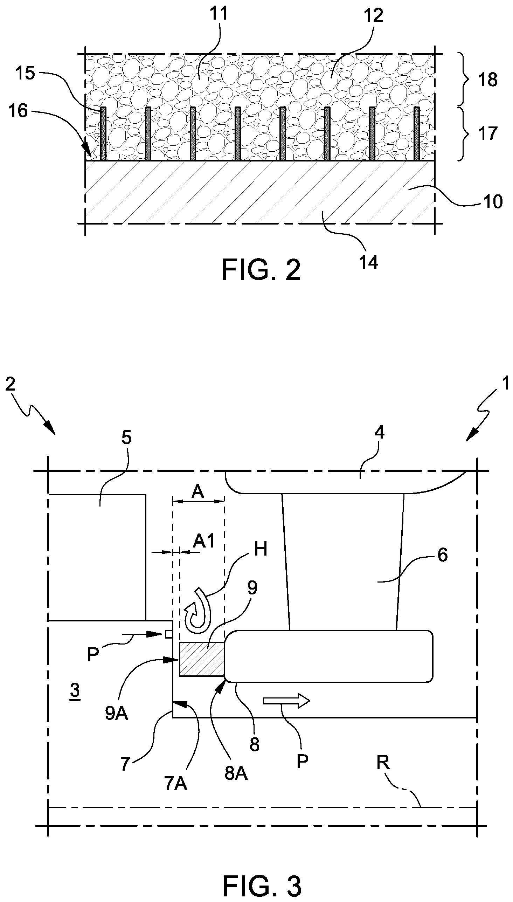

With reference to Figure 2, the material according to the invention is a hybrid CMC - ceramic foam material, comprising a CMC structure 10 and a ceramic foam layer 11 defining an abradable layer 12 on at least one surface of the CMC structure 10.

As known, a CMC (ceramic matrix composite) consists of ceramic fibers embedded in a ceramic matrix. The matrix and fibers can consist of any ceramic material, whereby carbon and carbon fibers can also be considered a ceramic material.

In particular, the CMC structure 10 is made of a CMC and comprises a solid base portion 14 and a honeycomb pattern 15 projecting from at least one face 16 of the solid base portion 14.

Here and in the following, term "honeycomb" means any pattern of polyhedral hollow cells.

The cells may have various shape, being in particular square, hexagonal, etc. (in plan view); in general terms, the cells project from the face 16 of the solid base portion 14 and are delimited by lateral walls and are open at the top.

The honeycomb pattern 15 is positioned on the face 16 of the solid base portion 14.

Both the solid base portion 14 and the honeycomb pattern 15 are made of (the same) CMC.

Examples of suitable CMCs are the Whipox CMCs manufactured by WPX (WPX Faserkeramik GmbH, Troisdorf, Germany).

The CMCs are produced by filament winding process. The fibers are for example Nextel^{®} 610 or Nextel^{®} 720 produced by 3M (3M Advanced Materials Division, Minnesota, USA).

The matrix can be made, for example, of alumina, aluminosilicate or mullite.

The filament winding process allows the solid base portion 14 and the honeycomb pattern 15 to be obtained in a single winding operation.

In any case, the CMC is selected so as to withstand temperatures of at least 1200°C or higher (i.e. ≥ 1200°C).

The ceramic foam layer 11 is made of a porous ceramic foam attached to the CMC structure 10.

In particular, the ceramic foam is positioned on the honeycomb pattern 15 and penetrates inside the cells of the honeycomb pattern 15.

The ceramic foam layer 11 comprises in fact a root portion 17, interpenetrating the honeycomb pattern 15; and an outer portion 18, projecting outside the honeycomb pattern 15.

Thus, the honeycomb pattern 15 provides mechanical anchoring of the ceramic foam layer 11, i.e. the abradable layer 12, to the CMC structure 10 and strengthen the bond between the CMC of the CMC structure 10 and the ceramic foam of the abradable layer 12.

The ceramic foam used for making the abradable layer 12 is for example one of the refractory foams manufactured by De Cavis (De Cavis AG, Dübendorf, Switzerland). The foams can be made, for example, of alumina, aluminosilicate, mullite or any other suitable ceramic and are advantageously manufactured using a wet processing route.

In any case, the ceramic foam is selected so as to withstand temperatures up to approximately 1700°C.

The ceramic foam has porosity features (and hence abradability, as a consequence) that are selected/adjusted according to the intended use.

For example, the ceramic foam has a porosity ranging between 50 and 90%, preferably between 60 and 80%.

The material of the invention is advantageously prepared by a manufacturing method comprising the following steps:
- providing the CMC structure 10, comprising the solid base portion 14 and the honeycomb pattern 15 projecting from the solid base portion 14, preferably by a filament winding process (as detailed hereinbelow);
- applying a green ceramic foam onto the honeycomb pattern 15 to form the ceramic foam layer 11, i.e. the abradable layer 12; if necessary, a sufficient load is applied using for example a hydraulic press to develop proper contact between the green foam and the dried CMC structure 10;
- sintering the hybrid structure consisting of the CMC structure 10 (comprising the solid base portion 14 and the honeycomb pattern 15) and the ceramic foam layer 11 defining the abradable layer 12, for example in a resistance heated furnace under air atmosphere, to obtain the final hybrid abradable seal structure.

According to an aspect of the invention, the CMC structure 10 is prepared by filament winding.

In particular, the CMC structure 10 is prepared by winding ceramic slurry impregnated filaments of ceramic fibers, preferably under tension and for example over a rotating axisymmetric mandrel; after sintering, the impregnated ceramic slurry forms the ceramic matrix embedding the ceramic fibers.

Typically, the filaments of ceramic fibers are wound, preferably under tension, over a rotating mandrel; the mandrel rotates around a spindle (defining a first axis) while a delivery nozzle on a carriage (movable along a second axis) lays down the ceramic slurry impregnated fibers in the desired pattern or angle.

Lay-up and fixation of the fibers results in a so-called preform, shaped as the desired component.

In a preferred embodiment, the CMC structure 10 (comprising the solid base portion 14 and the honeycomb pattern 15 projecting from the solid base portion 14) is prepared by filament winding process on a cylindrical mandrel. Then, the wound CMC structure 10 is removed from the mandrel, longitudinally cut, and flattened so as the preform assumes a substantially plane configuration, and dried (for example at 60°C for 24 h).

Optionally, if required, the component is finally machined and/or subject to finishing treatments.

In particular, the fibers are laid down so as to form the honeycomb pattern 15 over the solid base portion 14.

The ceramic foam is then applied on the honeycomb pattern 15 to form the ceramic foam layer 11 defining the abradable layer 12. The ceramic foam can be applied while the wound CMC structure is still on the mandrel, or preferably after removing the winding from the mandrel and after flattening and drying.

Then, the wound body is dried and sintered to a rigid CMC at high temperature.

Advantageously, the CMC and the ceramic foam are co-sintered. In other words, the sintering process is carried out after the ceramic foam is applied onto the CMC structure 10 and the CMC and the ceramic foam are sintered together.

A preferred use of the hybrid CMC - ceramic foam material of the invention is for making seal elements for gas turbines, as shown in Figures 3 to 5.

In figure 3 a detail of a turbine section 1 of a gas turbine 2 is depicted, comprising in particular a rotor 3, having an axis of rotation R (shown out of scale), and a stator 4, provided with rows of blades 5 and vanes 6 respectively.

In particular, Figure 3 shows a blade 5 and a vane 6 directly facing each other.

The blade 5 and the vane 6 are spaced apart from each other. In particular, there is an axial gap A between the blade 5 and the vane 6, in particular between a trailing edge shank 7 of the blade 5 and a leading edge platform 8 of the vane 6.

As previously discussed with reference to the prior art, the gap A would allow the passage of hot gas H below the vane 6 and purge air P is accordingly injected from the blade 5 and/or the vane 6.

According to the invention, a seal element 9, made of the hybrid CMC - ceramic foam material described above, is used between the blade 5 and the vane 6 and in particular between the trailing edge shank 7 of the blade 5 and the leading edge platform 8 of the vane 6.

The seal element 9 is in particular an annular seal element which projects, for example (though not necessarily), from an annular face 8A of the leading edge platform 8 of the vane 6 and has a front surface 9A facing the face 7A of the trailing edge shank 7 of the blade 5.

The seal element 9 has a thickness (axial thickness, measured parallel to the axis of the turbine 2) of at least 5 mm, for example ranging between 5 and 7 mm.

It is however clear to the skilled person that the material of the invention can be advantageously used in other applications, such as to make seal elements in other parts of the gas turbine, in particular between a movable part and a static part of the gas turbine directly facing each other, but also to make other components such as heat shields (in particular stator heat shields), combustor liners, etc.

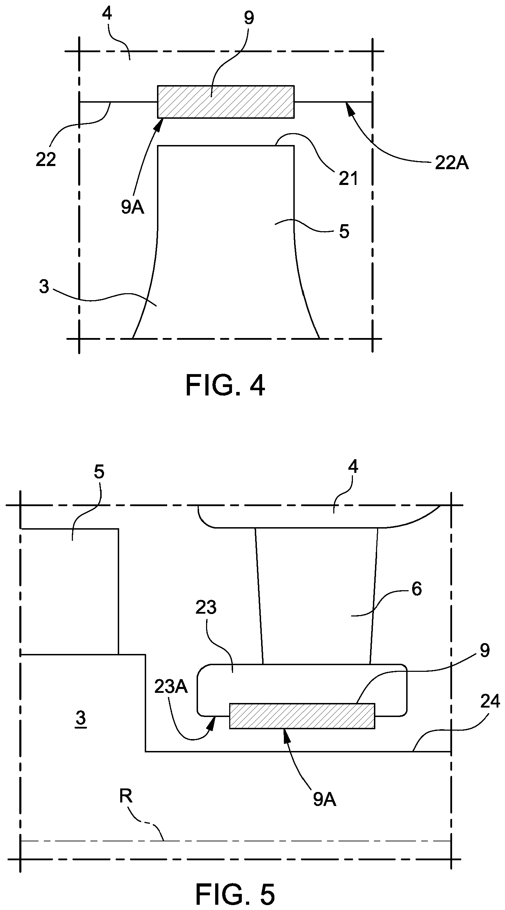

For example, in Figure 4, a seal element 9, made of the hybrid CMC - ceramic foam material described above, is used between a blade tip 21, defined by a radially outer end of a blade 5, and a stator portion 22, defined by a portion of the stator 4 directly facing the blade tip 21.

The seal element 9 is therefore positioned in the clearance between the blade tip 21 and the stator portion 22 facing the blade tip 21.

Advantageously, the seal element 9 is attached to the stator portion 22. In particular, the seal element 9 is an annular seal element which projects, for example, from an annular face 22A of the stator portion 22 and has a front surface 9A facing the blade tip 21.

In the further example of Figure 5, a seal element 9, made of the hybrid CMC - ceramic foam material described above, is used between a vane hub 23 of a vane 6 and a rotor portion 24, defined by a portion of the rotor 3 directly facing the vane hub 23. The seal element 9 is therefore positioned in the clearance between the vane hub 23 and the rotor portion 24 facing the vane hub.

Advantageously, the seal element 9 is attached to the vane hub 23. In particular, the seal element 9 is an annular seal element which projects, for example, from an annular face 23A of the vane hub 23 and has a front surface 9A facing the rotor portion 24.

Finally, although the invention has been explained in relation to the above-mentioned preferred embodiments, it is to be understood that many other possible modifications and variations can be made without departing from the scope of the appended claims.

## Claims

1. A hybrid CMC - ceramic foam abradable material, comprising a CMC structure (10), made of a CMC, and a ceramic foam layer (11), made of a ceramic foam and defining an abradable layer (12), on at least one surface of the CMC structure (10); **characterized in that** the CMC structure (10) comprises a solid base portion (14) and a honeycomb pattern (15) projecting from at least one face (16) of the solid base portion (14) and having hollow cells; wherein the ceramic foam penetrates in the cells of the honeycomb pattern (15) .

2. The material according to Claim 1, wherein the CMC of the CMC structure (10) and the ceramic foam of the ceramic foam layer (11) are interpenetrated with each other at the honeycomb pattern (15).

3. The material according to Claim 1 or 2, wherein the ceramic foam layer (11) comprises a root portion (17), interpenetrating the honeycomb pattern (15); and an outer portion (18), projecting outside the honeycomb pattern (15).

4. The material according to any one of the preceding Claims, wherein both the solid base portion (14) and the honeycomb pattern (15) are made of the same CMC.

5. The material according to any one of the preceding Claims, wherein the CMC is selected so as to withstand temperatures of 1200°C or higher; and the ceramic foam is selected so as to withstand temperatures of up to 1700°C.

6. A method for manufacturing a material according to any one of the previous claims, comprising the steps of: providing the CMC structure (10), comprising the solid base portion (14) and the honeycomb pattern (15) projecting from the solid base portion (14); and applying the ceramic foam onto the honeycomb pattern (15) to form the ceramic foam layer (11).

7. The method according to claim 6, wherein the CMC structure (10) is prepared by filament winding, in which filaments of ceramic fibers impregnated with a ceramic slurry are laid down in the shape of a desired component to manufacture; the impregnated ceramic slurry forming the ceramic matrix.

8. The method according to claim 7, wherein the fibers are laid down so as to form the honeycomb pattern (15) over the solid base portion (14); and the ceramic foam is then applied on the honeycomb pattern (15) to form the ceramic foam layer (11) defining the abradable layer (12).

9. The method according to one of claims 6 to 8, wherein the CMC of the CMC structure (10) and the ceramic foam of the ceramic foam layer (11) are co-sintered together in the same sintering process, carried out after the ceramic foam is applied onto the CMC structure (10).

10. Use of the hybrid CMC - ceramic foam material according to any one of claims 1 to 5 for making abradable seal elements (9) for gas turbines.

11. The use according to claim 10, wherein the abradable seal element (9) is used between a movable part and a static part of the gas turbine (2) directly facing each other.

12. The use according to claim 10 or 11, wherein the abradable seal element (9) is used between a blade (5) and a vane (6) directly facing each other.

13. The use according to claim 12, wherein the abradable seal element (9) is used between a trailing edge shank (7) of the blade (5) and a leading edge platform (8) of the vane (6).

14. The use according to claim 10 or 11, wherein the abradable seal element (9) is used between a blade tip (21) and a stator portion (22) directly facing each other; or a vane hub (23) and a rotor portion (24) directly facing each other.

## Patentansprüche

1. Abschleifbares CMC-Keramikschaum-Hybrid-Material, umfassend eine CMC-Struktur (10), die aus einem CMC hergestellt ist, und eine Keramikschaumschicht (11), die aus einem Keramikschaum hergestellt ist und eine abschleifbare Schicht (12) auf wenigstens einer Oberfläche der CMC-Struktur (10) definiert; **dadurch gekennzeichnet, dass** die CMC-Struktur (10) einen festen Basisabschnitt (14) und ein Wabenmuster (15), das von wenigstens einer Fläche (16) des festen Basisabschnitts (14) hervorsteht und Hohlzellen aufweist, umfasst; wobei der Keramikschaum in die Zellen des Wabenmusters (15) eindringt.

2. Material nach Anspruch 1, wobei an dem Wabenmuster (15) der CMC der CMC-Struktur (10) und der Keramikschaum der Keramikschaumschicht (11) einander durchdringen.

3. Material nach Anspruch 1 oder 2, wobei die Keramikschaumschicht (11) einen das Wabenmuster (15) durchdringenden Wurzelabschnitt (17) und einen außerhalb des Wabenmusters (15) hervorstehenden Außenabschnitt (18) umfasst.

4. Material nach einem der vorangehenden Ansprüche, wobei sowohl der feste Basisabschnitt (14) als auch das Wabenmuster (15) aus demselben CMC hergestellt sind.

5. Material nach einem der vorangehenden Ansprüche, wobei der CMC so ausgewählt ist, dass er Temperaturen von 1200 °C oder höher standhält; und der Keramikschaum so ausgewählt ist, dass er Temperaturen von bis zu 1700 °C standhält.

6. Verfahren zum Herstellen eines Materials nach einem der vorangehenden Ansprüche, das die Schritte umfasst: Bereitstellen der CMC-Struktur (10), die den festen Basisabschnitt (14) und das von dem festen Basisabschnitt (14) hervorstehende Wabenmuster (15) umfasst; und Aufbringen des Keramikschaums auf das Wabenmuster (15), um die Keramikschaumschicht (11) auszubilden.

7. Verfahren nach Anspruch 6, wobei die CMC-Struktur (10) durch Filamentwickeln hergestellt wird, bei dem Filamente aus keramischen Fasern, die mit einer keramischen Aufschlämmung imprägniert sind, in der Form eines gewünschten herzustellenden Bauteils abgelegt werden; wobei die imprägnierte keramische Aufschlämmung die keramische Matrix ausbildet.

8. Verfahren nach Anspruch 7, wobei die Fasern so abgelegt werden, dass sie das Wabenmuster (15) über dem festen Basisabschnitt (14) ausbilden; und der Keramikschaum dann auf das Wabenmuster (15) aufgebracht wird, um die Keramikschaumschicht (11) zu bilden, die die abschleifbare Schicht (12) definiert.

9. Verfahren nach einem der Ansprüche 6 bis 8, wobei der CMC der CMC-Struktur (10) und der Keramikschaum der Keramikschaumschicht (11) in demselben Sinterprozess gemeinsam gesintert werden, der durchgeführt wird, nachdem der Keramikschaum auf die CMC-Struktur (10) aufgebracht worden ist.

10. Verwendung des CMC-Keramikschaum-Hybrid-Materials nach einem der Ansprüche 1 bis 5 zur Herstellung von abschleifbaren Dichtungselementen (9) für Gasturbinen.

11. Verwendung nach Anspruch 10, wobei das abschleifbare Dichtungselement (9) zwischen einem beweglichen Teil und einem statischen Teil der Gasturbine (2), die einander direkt gegenüberliegen, verwendet wird.

12. Verwendung nach Anspruch 10 oder 11, wobei das abschleifbare Dichtungselement (9) zwischen einer Schaufel (5) und einer Leitschaufel (6), die einander direkt gegenüberliegen, verwendet wird.

13. Verwendung nach Anspruch 12, wobei das abschleifbare Dichtungselement (9) zwischen einer Schafthinterkante (7) der Schaufel (5) und einer Plattformvorderkante (8) der Leitschaufel (6) verwendet wird.

14. Verwendung nach Anspruch 10 oder 11, wobei das abschleifbare Dichtungselement (9) zwischen einer Schaufelspitze (21) und einem Statorabschnitt (22), die einander direkt gegenüberliegen, oder einer Schaufelnabe (23) und einem Rotorabschnitt (24), die einander direkt gegenüberliegen, verwendet wird.

## Revendications

1. Matériau abradable hybride CMC - mousse céramique, comprenant une structure CMC (10), constituée d'un CMC, et une couche de mousse céramique (11), constituée d'une mousse céramique et définissant une couche abradable (12), sur au moins une surface de la structure CMC (10) ; **caractérisé en ce que** la structure CMC (10) comprend une partie de base solide (14) et un motif en nid d'abeilles (15) faisant saillie sur au moins une face (16) de la partie de base solide (14) et présentant des cellules creuses ; dans lequel la mousse céramique pénètre dans les cellules du motif en nid d'abeilles (15).

2. Matériau selon la revendication 1, dans lequel le CMC de la structure CMC (10) et la mousse céramique de la couche de mousse céramique (11) s'interpénètrent au niveau du motif en nid d'abeilles (15).

3. Matériau selon la revendication 1 ou 2, dans lequel la couche de mousse céramique (11) comprend une partie racine (17), s'interpénétrant avec le motif en nid d'abeilles (15) ; et une partie extérieure (18), faisant saillie à l'extérieur du motif en nid d'abeilles (15).

4. Matériau selon l'une quelconque des revendications précédentes, dans lequel la partie de base solide (14) et le motif en nid d'abeilles (15) sont constitués du même CMC.

5. Matériau selon l'une quelconque des revendications précédentes, dans lequel le CMC est choisi pour résister à des températures de 1 200 °C ou plus ; et la mousse céramique est choisie pour résister à des températures allant jusqu'à 1 700 °C.

6. Procédé de fabrication d'un matériau selon l'une quelconque des revendications précédentes, comprenant les étapes de : fourniture de la structure CMC (10), comprenant la partie de base solide (14) et le motif en nid d'abeilles (15) faisant saillie depuis la partie de base solide (14) ; et application de la mousse céramique sur le motif en nid d'abeilles (15) pour former la couche de mousse céramique (11).

7. Procédé selon la revendication 6, dans lequel la structure CMC (10) est préparée par enroulement filamentaire, dans lequel des filaments de fibres céramiques imprégnés d'une suspension céramique sont déposés dans la forme d'un composant souhaité à fabriquer, la suspension céramique imprégnée formant la matrice céramique.

8. Procédé selon la revendication 7, dans lequel les fibres sont déposées de manière à former le motif en nid d'abeilles (15) sur la partie de base solide (14) ; et la mousse céramique est ensuite appliquée sur le motif en nid d'abeilles (15) pour former la couche de mousse céramique (11) définissant la couche abradable (12).

9. Procédé selon l'une quelconque des revendications 6 à 8, dans lequel le CMC de la structure CMC (10) et la mousse céramique de la couche de mousse céramique (11) sont frittés conjointement dans le même processus de frittage, effectué après l'application de la mousse céramique sur la structure CMC (10).

10. Utilisation du matériau hybride CMC - mousse céramique selon l'une quelconque des revendications 1 à 5 pour la fabrication d'éléments d'étanchéité abradables (9) pour turbines à gaz.

11. Utilisation selon la revendication 10, dans laquelle l'élément d'étanchéité abradable (9) est utilisé entre une partie mobile et une partie statique de la turbine à gaz (2) orientées directement l'une face à l'autre.

12. Utilisation selon la revendication 10 ou 11, dans laquelle l'élément d'étanchéité abradable (9) est utilisé entre une aube (5) et une ailette (6) orientées directement l'une face à l'autre.

13. Utilisation selon la revendication 12, dans laquelle l'élément d'étanchéité abradable (9) est utilisé entre une tige du bord de fuite (7) de l'aube (5) et une plate-forme du bord d'attaque (8) de l'ailette (6).

14. Utilisation selon la revendication 10 ou 11, dans laquelle l'élément d'étanchéité abradable (9) est utilisé entre une extrémité d'aube (21) et une partie de stator (22) orientées directement l'une face à l'autre ; ou un moyeu d'ailette (23) et une partie de rotor (24) orientés directement l'un face à l'autre.
